# EUROPEAN PATENT SPECIFICATION

(11) **EP 2 113 659 B1**
(45) Date of publication and mention of the grant of the patent: **17.12.2014**
(21) Application number: 09005870.2
(22) Date of filing: 28.04.2009
(51) Int. Cl.: F03D 7/00, F03D 7/02, F03D 7/04

(54) **Method of operation of a wind turbine which minimises the oscillations of the tower**
Verfahren zum Betreiben einer Windturbine zur Minimierung der Schwingungen des Turms
Procédé de fonctionnement d'éolienne qui minimise les oscillations de la tour

(30) Priority: 29.04.2008 ES 200801228
(43) Date of publication of application: 04.11.2009
(73) Proprietor: Gamesa Innovation & Technology, S.L., 31621 Sarriguren (ES)
(72) Inventor: Mayo, Azqueta, Oscar, 31621 Sarriguren (ES); Fernandez, Romero, Ignacio, 31621 Sarriguren (ES)

(56) References cited:
- EP-A1- 0 244 341
- EP-B1- 1 269 015
- US-A1- 2006 033 339

## Description

### FIELD OF THE INVENTION

The invention relates to a method of operation of a wind turbine and, in particular, a method of operation of a wind turbine in situations in which the speed of the rotor is in a range which can produce frequencies which resonate with the natural frequency of the tower.

### BACKGROUND

Wind turbine towers are subject to oscillatory movement. The frequency of oscillation of a particular tower, also known as the natural frequency, resonance frequency or eigenfrequency depends among other factors on its height, the material used in its construction, the thickness of its walls and the weight of the nacelle and the rotor.

For its part, each time a wind turbine rotor blade passes by the tower the rotor load on the tower reduces slightly and if the rotor is rotating at a rotational speed in which a rotor blade passes the tower each time that it is in one of its extreme positions it can happen that either it damps or amplifies the oscillations of the tower. In turn, the rotor blades are flexible and can vibrate at a certain frequency which can also damp or amplify the oscillations of the tower.

If all the factors indicated act simultaneously this can produce an oscillation of the wind turbine tower of such magnitude that it can cause damage to the tower or other components of the wind turbine or at least reduce their efficiency.

The established techniques to minimise these are, on the one hand, to use towers whose design follows structural criteria intended to reduce their natural frequency and, on the other hand, to use wind turbine operation methods which ensure that the rotor excitation frequencies are sufficiently far away from the tower's natural frequency to avoid dynamic increments in the structural loads produced when they coincide which, as is well known, lead to premature fatiguing of the basic components of the wind turbine.

One of these methods of operation is described in EP 0 244 341 and consists basically of avoiding having the wind turbine operate at a speed falling within a critical range with respect to the natural frequency of the tower.

Another of these methods of operation, intended in particular for a wind turbine located on a marine platform, is described in EP 1 269 015 and consists basically of applying controls so that the operation of the wind turbine at a speed falling within a critical band with respect to the natural frequency of the tower, is accomplished as fast as possible.

Another of these methods involves applying a control over the speed of the rotor in the critical range between two pre-established power curves so as to cross the range quickly.

These methods have various drawbacks and, in particular, involve losses in energy production. This invention is intended to solve this.

### SUMMARY OF THE INVENTION

An aim of this invention is to provide a method of operation of a wind turbine which minimises the time during which the rotor speed lies in a range within which frequencies can be produced which resonate with the natural frequency of the tower.

Another aim of this invention is to provide a method of operation of a wind turbine which minimises the negative impact both in terms of power production and dynamic increments in loads on wind turbine components when the rotor speed lies in a range within which frequencies can be produced which resonate with the natural frequency of the tower.

These and other aims can be achieved with a method of operation of a variable speed wind turbine having a control mechanism designed to optimize power in a speed interval V1-V2 around the critical speed Vc which produces a rotor frequency coinciding with the natural frequency of the tower, in which rather than regulating the torque demanded by the generator by following an ideal torque vs. generator speed curve, it is followed a temporary regulation using a curve composed of a first section in which the torque rises from a point corresponding to a speed Vi until it reaches the curve of constant power P2 at the point corresponding to speed V1, of a second section in which the torque falls until it reaches the curve of constant power P1 at the point corresponding to speed V2 and of a third section in which the torque rises until it reaches the ideal curve at the point corresponding to speed Vf, the power levels P2 and P1 being respectively higher and lower by a predetermined percentage p than the power level Pc corresponding to the natural frequency of the tower on the above-mentioned ideal curve, characterised because it comprises the following steps:
- Continually monitoring the speed V of the generator and activating a counter assigning to it a value S applying to the time passed since its activation a weighting coefficient which depends on the difference between V and Vc as an absolute value, which has positive values in the speed interval Vi-Vf, reaching a maximum when V=Vc, and negative values elsewhere.
- Proceeding to the activation of the above-mentioned temporary regulation when the value S of the counter reaches a preestablished value Si and to its deactivation when the value S of the counter reaches a preestablished value Sf, returning in such case to the mode of regulation whereby the torque demanded by the generator follows the above-mentioned ideal curve.

In a preferred embodiment of this invention account is also taken of the acceleration of the tower when establishing the value Si of the counter which triggers the activation of the temporary regulation. This minimises the time during which the regulation of the wind turbine does not follow the ideal curve.

In another preferred embodiment of this invention the activation of the above-mentioned temporary regulation is fully implemented at a predetermined time T following the use of intermediate temporary curves until the final curve, corresponding to the above-mentioned values P1, P2, is reached. This reduces the loads associated with the above-mentioned temporary regulation eliminating in particular peaks of power/torque which can have a negative impact on some of the wind turbine components.

As to the differences between the method described in this invention and the above-mentioned known methods it must be mentioned that it is an adaptive method in which, on the one hand, the above-mentioned temporary regulation is activated and deactivated automatically when certain preestablished conditions apply and, on the other hand, in which the activation only takes place in those circumstances when it is really necessary. This produces an improvement in generator output.

Other characteristics and advantages of this invention will be seen from the detailed description which follows from an illustrative but not limitative embodiment of its aim, based on the accompanying figures.

### BRIEF DESCRIPTION OF FIGURES

Figure 1 shows the ideal torque vs. generator speed curve normally used in the control system of a variable speed wind turbine and the curve used in the temporary regulation considered in this invention.
Figure 2 shows time series of the generator speed and power produced corresponding to the simulated behaviour of a wind turbine subjected to a wind of 4 m/sec on applying the temporary regulation considered in this invention.
Figure 3 shows time series of the generator speed and power produced corresponding to the simulated behaviour of a wind turbine subjected to a wind of 4.2 m/sec on applying the temporary regulation considered in this invention.
Figure 4 shows time series of the generator speed and power produced corresponding to the simulated behaviour of a wind turbine subjected to a sinusoidal wind of 4.1 m/sec + sine 1 m/sec on applying the temporary regulation considered in this invention.
Figure 5 shows the power vs. generator speed curve corresponding to the ideal curve normally used in the control system of a variable speed wind turbine, the curve corresponding to the temporary regulation considered in this invention and the broken line which follows the weighting coefficient of the counter used to establish the time at which the above-mentioned temporary regulation is activated.
Figure 6 shows the power vs. generator speed curve corresponding to the ideal curve normally used in the control system of a variable speed wind turbine and the series of curves used during the activation phase of the temporary regulation considered in this invention.
Figure 7 shows a graph representing the value Si of the counter as a function of the value of the acceleration A of the tower.

### DETAILED DESCRIPTION OF PREFERRED EMBODIMENTS

The basic aim of methods of operation of variable speed wind turbines is to achieve an operation at the ideal aerodynamic output for as much of the time as possible.

As is known, the kinetic energy associated with a wind current depends on the area swept by that current, on its density and on the cube of the wind speed and it is considered that wind turbines can extract up to 59% of this energy. Accordingly, we represent the capacity of each wind turbine to approach this limit by the so-called power coefficient Cp which is determined by its aerodynamic characteristics, particularly by its tip speed ratio which is defined as the relationship between the tangential speed of the blade tip and the speed of the incident wind. If we can keep this ratio at the maximum power coefficient Cp of the wind turbine so that the rotor speed follows the wind speed we can achieve an extremely efficient wind turbine.

The control strategy generally used in variable speed wind turbines is based on electrically adjusting the generator's torque to achieve the maximum output and this is carried out using a controller which receives signals indicating the speed of the generator and the power produced by the generator and which provides a torque reference signal to the converter to obtain the required power.

Accordingly, the wind turbine controller uses a curve which defines the desired functional relationship between power and speed to achieve ideal output.

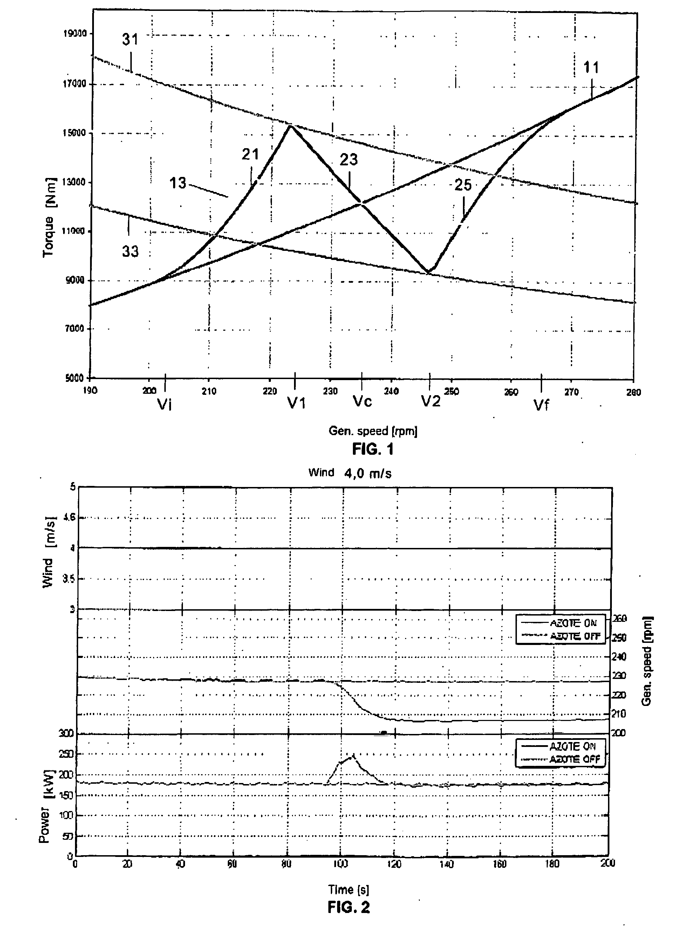

A curve of this type is curve 11 in Figure 1. However, if the operation of the wind turbine is carried out strictly following the references provided by that curve 11, there are certain velocities which may give rise to resonances.

In the embodiment of the method of operation subject of this invention which is described below we start from the hypothesis that the critical range of velocities of the rotor corresponds to a generator speed interval V1-V2 represented in Figure 1 by the values 223-247 rpm, which assumes a margin of 5% with respect to the critical speed Vc of 235 and in Figures 2-6 to the values 218-251 rpm, which assumes a margin of 7.5% with respect to the above-mentioned critical speed Vc. As is well known in the art, the values V1-V2 corresponding to each particular wind turbine are determined following criteria set out in regulatory standards.

The basic idea of the method of operation subject of this invention is to substitute the normal regulation of the wind turbine following the ideal curve 11 with temporary regulation following curve 13, which avoids the wind turbine operating in the critical range by causing it to exit from the latter in a short period of time, and only in specific speed and/or tower vibration conditions.

The curve 13 is composed of a first section 21 in which the torque rises from a point corresponding to an initial speed Vi until it reaches curve 31 of constant power P2 at the point corresponding to speed V1, of a second section in which the torque falls until it reaches curve 33 of constant power P1 at the point corresponding to speed V2, and a third section 25 in which the torque rises until it reaches the ideal curve at a point corresponding to speed Vf, the power values P2 and P1 being higher and lower respectively by a predetermined percentage p than the power Pc, which in the case of Figure 1 is 20%.

It is considered that in different embodiments of this invention the above-mentioned percentage p could lie between 3% and 40%. A percentage of around 20% would be appropriate in most of these embodiments.

For their part, the values Vi and Vf are determined respectively from the values V1 and V2 so that the above-mentioned sections 21, 25 have an appropriate shape.

The effect of the temporary regulation following the method considered in this invention can be seen in Figures 2, 3 and 4 obtained using conventional simulation tools.

Figure 2 relates to a wind turbine in which the critical range of generator velocities V1-V2 corresponds to the interval 218 rpm to 251 rpm. It is when the wind speed has a value which would cause, based on ideal curve 11, that the wind turbine would be operating within the above-mentioned critical range, that it is intended the use of the temporary regulation subject of this invention, referred to as AZOTE in the Figures. In the scenario represented in Figure 2 a constant wind of 4 m/sec, implies a generator speed of 228 rpm. From Figure 2 we can see a comparison of the effect on generator speed and power produced when the wind turbine is operated with normal regulation, using the ideal curve 11, and when the wind turbine is operated with a temporary regulation, using curve 13 from the point in time corresponding to T = 98 sec. In this case we can see that, from that point in time the generator speed reduces progressively as the power demanded increases until it stabilises at 208 rpm, therefore outside the critical range.

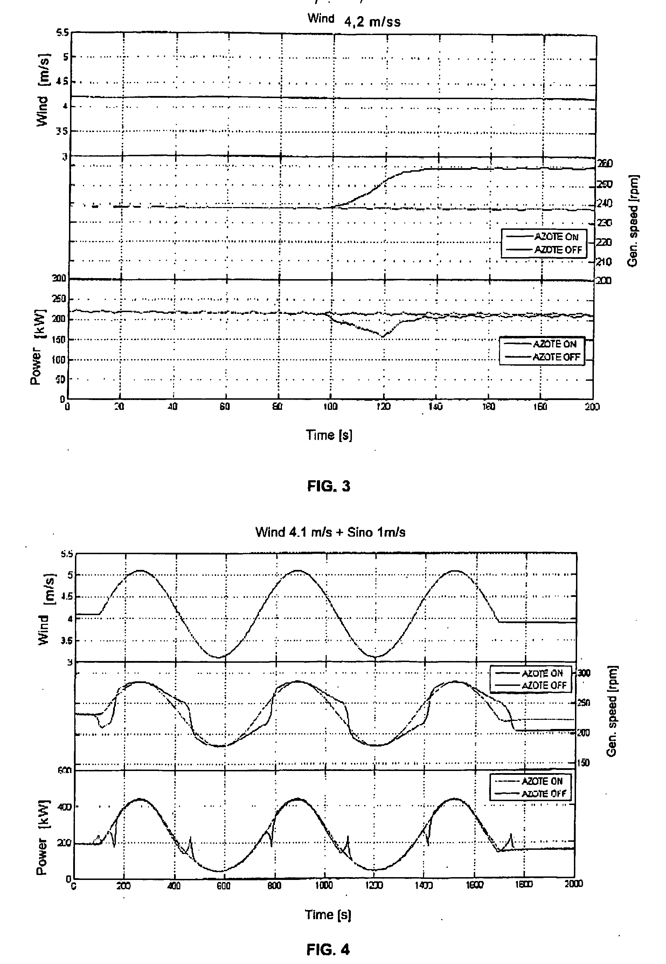

Figure 3 illustrates a scenario where the wind is blowing at 4.2 m/sec towards the same wind turbine in which we see that the effect of the temporary regulation subject of this invention is to increase generator speed progressively as the power demanded reduces until it stabilises at 260 rpm, therefore outside the critical range.

Figure 4 shows the behaviour of the wind turbine in the case of a sinusoidal wind at 4.1 m/sec + sine 1 m/sec from which we can see that the effect of the temporary regulation subject of this invention is to minimise the time which the wind turbine spends in the critical range of generator speeds.

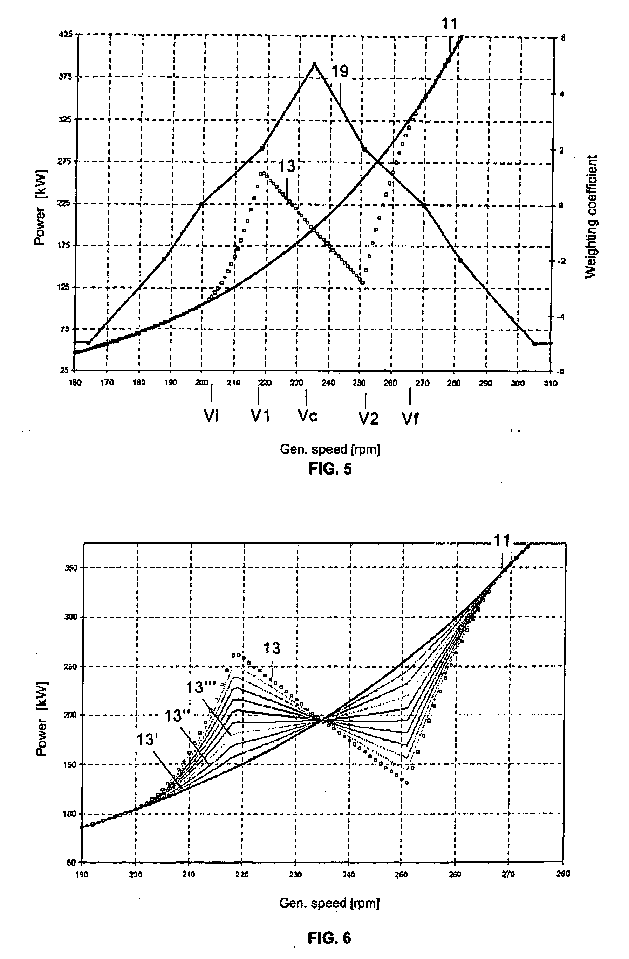

Figure 5 shows on the one hand curves 11 and 13 corresponding to the normal regulation and the temporary regulation of the wind turbine and on the other hand the broken line 19 which shows the values of the weighting coefficient used to assign the value S of the counter, used in this invention to activate temporary regulation when a preestablished value Si is reached and to deactivate it when a preestablished value Sf, which is usually 0, is reached. It can be seen that these values of the weighting coefficient depend on how great or small the proximity of the speed V of the wind turbine to the critical speed Vc, and are positive in the interval Vi-Vf and negative elsewhere. Once the counter is activated its value S is constantly updated, applying in each time interval the weighting factor corresponding to the wind turbine speed in that interval.

If the wind turbine starts to operate at a particular time at a speed of, for example, 230 rpm, then the value S of the counter at that time would be incremented by the value obtained by applying the time for which it has been operating at that speed by 4, being the corresponding weighting factor in accordance with line 19 of Figure 5. When the value S reaches the preestablished value Si the temporary regulation mode is brought into action which causes an increase or decrease in the speed V of the generator in accordance with what has been indicated previously and this involves a decrease in the value S of the counter because the new speed corresponds to a negative weighting coefficient. On S reaching the value Sf temporary regulation is deactivated.

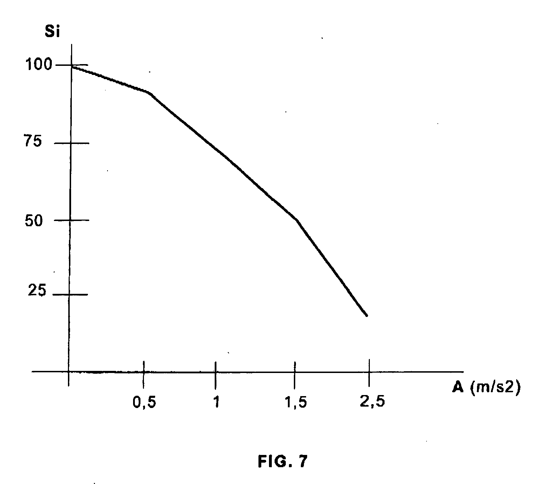

The value Si can be set taking into account additionally the acceleration of the tower (which must be monitored continually at the same time as the wind turbine speed) as shown in the graph in Figure 7. If the acceleration is 0 the value of Si shall be 100 units. That value shall logically be the value of Si in an embodiment of the invention where no account is taken of the acceleration of the tower rather only the time spent within the critical range V1-V2 as indicated in the previous paragraph. For higher values of acceleration the value of Si reduces which implies an advancing of the activation of the temporary regulation.

Figure 6 illustrates the progressive activation in accordance with a preferred embodiment of this invention regarding temporary regulation under which for a predetermined time period T the final curve 13 is not used, rather in each interval of for example 0.5 seconds intermediate curves 13', 13", 13''' are used until the final curve 13 is reached. The deactivation of the above-mentioned temporary regulation is always implemented when V is outside the interval Vi-Vf, that is, on the ideal curve 11.

It is considered that in different embodiments of this invention the above-mentioned predetermined time T can lie between 0 and 30 seconds. As is well understood the lower limit of this interval corresponds to the embodiment of the invention in which the activation of temporary regulation would not take place in a progressive manner. A time of around 5 seconds would be appropriate in most of these embodiments.

The method considered in this invention is implemented using the means available in the control systems of variable speed wind turbines. These control systems comprise on the one hand devices for measurement of relevant variables such as the acceleration of the tower, wind speed, generator speed or the power produced at each instant and processing means which allow to set up operational references for the wind turbine such as the torque demanded by the generator as a function of conditions.

The temporary regulation subject of this invention is implemented in particular by including in the above-mentioned processing means an algorithm whose basic input data are, as we have indicated, the speed of the generator and the acceleration of the tower, and whose output data is an operational reference for the torque demanded by the generator or other reference directly related to it.

As we have indicated, an advantage of the temporary regulation subject of in this invention compared with the known art is that it is not activated every time that the generator speed enters the critical range V1-V2 but only in those situations in which the combination of certain particular values for the acceleration of the tower and the time for which operation has been close to the critical speed Vc implies a risk to the integrity of the wind turbine or a failure to comply with the applicable standard for the purpose of maximising energy production and avoiding increments in the loads to which the wind turbine is exposed.

A paradigmatic example which puts this advantage into practice is the starting of the wind turbine with nominal wind. In this situation, following the method subject of this invention, the temporary regulation would not be applied rather the normal regulation following the ideal curve since the time required to transit the critical speed is minimal and involves no risk to the wind turbine. However, applying one of the methods of the known art would oblige the wind turbine to comply with the restrictions associated with passing through the critical speed which involves a loss of energy and efficiency as well as an increase in the load on the wind turbine.

Although this invention has been described entirely in terms of preferred embodiments, it is clear that we could introduce modifications within its scope, not regarding the latter as a limited by the embodiments described above, rather by the content of the following claims.

## Claims

1. Method of operation of a variable speed wind turbine having a control mechanism designed to optimise power in a speed interval (V1-V2) around the critical speed (Vc) which produces a rotor frequency coinciding with the natural frequency of the tower, in which rather than regulating the torque demanded by the generator by following an ideal torque vs. generator speed curve (11), it is followed a temporary regulation using a curve (13) composed of a first section (21) in which the torque rises from a point corresponding to an initial speed value (Vi) until it reaches the curve of constant power (P2) at the point corresponding to another speed value (V1), of a second section (23) in which the motor torque falls until it reaches the curve of constant power (P1) at the point corresponding to another speed value (V2) and of a third section (25) in which the torque rises until it reaches the ideal curve (11) at the point corresponding to another speed value (Vf), the power level values being respectively higher and lower by a predetermined percentage (p) than the power level corresponding to the natural frequency of the tower on the above-mentioned ideal curve (11), **characterised in that** it comprises the following steps:
a) continually monitoring the speed (V) of the generator and activating a counter assigning to it a value (S) of the counter applying to the time passed since its activation a weighting coefficient which depends on the difference between values of the generator speed (V) and of the critical speed (Vc), as an absolute value, which has positive values in the speed interval (Vi-Vf) between the initial speed (Vi) and the speed at which the torque reaches the ideal curve (Vf), reaching a maximum when the generator speed equals the critical speed (V=Vc), and negative values elsewhere;
b) proceeding to the activation of the above-mentioned temporary regulation when the value (S) of the counter reaches a preestablished value (Si) and to its deactivation when the value (S) of the counter reaches another preestablished value (Sf), returning in such case to the mode of regulation whereby the torque demanded by the generator follows the above-mentioned ideal curve (11).

2. Method of operation of a variable speed wind turbine in accordance with claim 1, **characterised in that** step a) also includes monitoring the acceleration (A) of the tower and **in that** the preestablished value (Si) used in step b) is determined by means of a preestablished function dependent on the value of acceleration (A).

3. Method of operation of a variable speed wind turbine in accordance with any of claims 1-2, **characterised in that** the above-mentioned percentage (p) lies between 3% and 40%.

4. Method of operation of a variable speed wind turbine in accordance with any of claims 1-3, **characterised in that** the activation of the above-mentioned temporary regulation is fully implemented at a predetermined time (T) following intermediate temporary curves (13', 13", 13") until the final curve (13) is reached, corresponding to the above-mentioned power values (P1, P2).

5. Method of operation of a variable speed wind turbine in accordance with claim 4, **characterised in that** the above-mentioned time (T) lies between 0 and 30 seconds.

## Patentansprüche

1. Verfahren zum Betreiben einer Windeneigieanlage mit variabler Geschwindigkeit, deren Steuermechanismus so ausgelegt ist, dass die Leistung in einem Geschwindigkeitsintervall (V1-V2) um die kritische Geschwindigkeit (Vc) optimiert wird; dadurch wird eine mit der natürlichen Frequenz des Turms übereinstimmende Rotorfrequenz erzeugt, wobei nicht das vom Generator geforderte Drehmoment regufiert wird, indem ein ideales Drehmoment im Vergleich zur Generatorgeschwindigkeitskurve (11) eingehalten wird, sondern statt dessen eine zeitweise Regulierung mit einer Kurve (13) befolgt wird, bestehend aus einer ersten Sektion (21), bei der das Drehmoment von einem dem ursprünglichen Geschwindigkeitswert (Vi) entsprechenden Punkt soweit ansteigt, bis es die konstante Leistungskurve (P2) an dem einer anderen Geschwindigkeit (V1) einer zweiten Sektion (23) entsprechenden Punkt erreicht, an dem das Motordrehmoment soweit abfällt, bis er die Kurve der konstanten Leistung (P1) an dem einem anderen Geschwindigkeitswert (V2) entsprechenden Punkt erreicht, und einer dritten Sektion (25), in welcher das Drehmoment soweit ansteigt, bis es die ideale Kurve (11) an dem einer anderen Geschwindigkeit (Vf) entsprechenden Punkt erreicht, wobei die Leistungsniveauwerte entsprechend um einen vorbestimmten Prozentsatz (p) höher und niedriger sind, als das Leistungsniveau entsprechend der natürlichen Frequenz des Turms an der oben genannten idealen Kurve (11), **gekennzeichnet dadurch, dass** darin folgende Schritte enthalten sind:
a) ständige Überwachung der Generatorgeschwindigkeit (V) und Aktivierung eines Zählers, dem ein Zählerwert (S) zugewiesen wird; auf die Zeit, die seit seiner Aktivierung verstrichen ist, wird ein gewichtender Koeffizient angewandt, der von der Differenz zwischen den Werten der Generatorgeschwindigkeit (V) und der kritischen Geschwindigkeit (Vc) als absoluter Wert abhängig ist; dieser hat positive Werte im Geschwindigkeitsintervall (Vi-Vf) zwischen der Anfangsgeschwindigkeit (Vi) und der Geschwindigkeit, bei der das Drehmoment die ideale Kurve (Vf) erreicht, wobei ein Maximum erreicht wird, wenn die Generatorgeschwindigkeit gleich der kritischen Geschwindigkeit (V=Vc) ist, und negative Werte überall sonst:
b) Aktivierung der oben genannten zeitweisen Regulierung, wenn der Wert (8) des Zählers den vorgesehenen Wert (Si) erreicht und Deaktivierung, wenn der Wert (S) des Zählers einen anderen vorgesehenen Wert (Sf) erreicht; in diesem Falle wird wieder zum Regulierungsmodus aktiviert, wobei das vom Generator geforderte Drehmoment der oben genannten idealen Kurve (11) folgt.

2. Verfahren zum Betreiben einer Windenergieanlage mit variabler Geschwindigkeit gemäß Anspruch 1, **gekennzeichnet dadurch, dass** bei Schritt a) auch die Überwachung der Beschleunigung (A) des Turms enthalten ist, und dass der vorgesehene Wert (Si) aus Schritt b) durch eine vorgesehene Funktion bestimmt wird, die vom Beschleunigungswert (A) abhängig ist.

3. Verfahren zum Betreiben einer Windenergieanlage mit variabler Geschwindigkeit gemäß den Ansprüchen 1-2, **gekennzeichnet dadurch, dass** der oben genannte Prozentsatz (p) zwischen 3% und 40% liegt.

4. Verfahren zum Betreiben einer Windenergieanlage mit variabler Geschwindigkeit gemäß den Ansprüchen 1-3, **gekennzeichnet dadurch, dass** die Aktivierung der oben genannten zeitweisen Regulierung zu einer festgelegten Zeit (T) vollständig erfolgt ist, unter Befolgung von dazwischen liegenden Zeitkurven (13', 13", 13"), solange, bis die abschließende Kurve (13) entsprechend den oben genannten Werten (P1, P2) erreicht ist.

5. Verfahren zum Betreiben einer Windenergieanlage mit variabler Geschwindigkeit gemäß Anspruch 4, **gekennzeichnet dadurch, dass** die oben genannte Zeit (T) zwischen 0 und 30 Sekunden liegt.

## Revendications

1. Méthode de fonctionnement d'une éolienne à vitesse variable ayant un mécanisme de commande conçu pour optimiser la puissance sur un intervalle de vitesse (V1-V2) autour de la vitesse critique (Vc) qui produit une fréquence de rotor coïncidant avec la fréquence naturelle de la tour, dans laquelle au lieu de réguler le couple demandé par le générateur en suivant un couple idéal en fonction de la courbe de vitesse du générateur (11), il est effectué une régulation temporaire utilisant une courbe (13) composée d'une première section (21) dans laquelle le couple augmente depuis un point correspondant à une valeur de vitesse initiale (Vi) jusqu'à ce qu'il atteigne la courbe de puissance constante (P2) au point correspondant à une autre vitesse (V1), d'une deuxième section (23) dans laquelle le couple moteur chute jusqu'à ce qu'il atteigne la courbe de puissance constante (P1) au point correspondant à une autre valeur de vitesse (V2) et une troisième section (25) dans laquelle le couple augmente jusqu'à ce qu'il atteigne la courbe idéale (11) au point correspondant à une autre vitesse (Vf), les valeurs de niveau de puissance étant respectivement supérieure et inférieure d'un pourcentage (p) prédéterminé au niveau de puissance correspondant à la fréquence naturelle de la tour sur la courbe idéale (11) susmentionnée, **caractérisée en ce qu'**elle comprend les étapes suivantes :
a) surveillance continue de la vitesse (V) du générateur et activation d'un compteur auquel il est attribué une valeur (S) du compteur appliquant au temps écoulé depuis son activation un coefficient de pondération qui dépend de la différence entre les valeurs de vitesse (V) du générateur et la vitesse critique (Vc) en valeur absolue, qui possède des valeurs positives dans l'intervalle de vitesses (Vi-Vf) compris entre la vitesse initiale (Vi) et la vitesse à laquelle le couple atteint la courbe idéale (Vf) avec un maximum lorsque la vitesse du générateur est égale à la vitesse critique (V=Vc), et des valeurs négatives ailleurs ;
b) activation de la régulation temporaire susmentionnée lorsque la valeur (S) du compteur atteint une valeur (Si) préétablie et sa désactivation lorsque la valeur (S) du compteur atteint une autre valeur (Sf) préétablie, avec retour dans ce cas au mode de régulation dans lequel le couple demandé par le générateur suit la courbe idéale (11) susmentionnée.

2. Méthode de fonctionnement d'une éolienne à vitesse variable conformément à la revendication 1, **caractérisée en ce que** l'étape a) inclut également la surveillance de l'accélération (A) de la tour et **en ce que** la valeur (Si) préétablie utilisée dans l'étape b) est déterminée via une fonction préétablie dépendant de la valeur de l'accélération (A).

3. Méthode de fonctionnement d'une éolienne à vitesse variable conformément à l'une des revendications 1-2, **caractérisée en ce que** le pourcentage (p) susmentionné est compris entre 3 % et 40 %.

4. Méthode de fonctionnement d'une éolienne à vitesse variable conformément à l'une des revendications 1-3, **caractérisée en ce que** l'activation de la régulation temporaire susmentionnée est totalement mise en oeuvre au bout d'un temps (T) prédéterminé suivant des courbes temporaires intermédiaires (13', 13", 13") jusqu'à atteindre la courbe finale (13), correspondant aux valeurs susmentionnées (P1, P2).

5. Méthode de fonctionnement d'une éolienne à vitesse variable conformément à la revendication 4, **caractérisée en ce que** le temps susmentionné (T) est compris entre 0 et 30 secondes.
